Europäisches Patentamt

(19) European Patent Office

Office européen des brevets

(11) Publication number: **0 299 976 B1**

# (12) EUROPEAN PATENT SPECIFICATION

(45) Date of publication of patent specification:
27.02.91 Bulletin 91/09

(21) Application number: **87903000.5**

(22) Date of filing: **30.03.87**

(86) International application number:
**PCT/US87/00709**

(87) International publication number:
**WO 87/05976 08.10.87 Gazette 87/22**

(51) Int. Cl.⁵: **F16B 5/02, F16B 29/00**

(54) **THREADED FASTENER FOR WORKPIECES OF COMPOSITE MATERIALS.**

(30) Priority: **01.04.86 US 851498**

(43) Date of publication of application:
**25.01.89 Bulletin 89/04**

(45) Publication of the grant of the patent:
**27.02.91 Bulletin 91/09**

(84) Designated Contracting States:
**DE FR IT**

(56) References cited:
**US-A- 3 066 568**
**US-A- 3 835 615**
**US-A- 4 048 898**

(73) Proprietor: **HUCK MANUFACTURING COMPANY**
**6 Thomas**
**Irvine, CA 92714 (US)**

(72) Inventor: **HURD, Ramon, L.**
**8857 Cardinal Street**
**Fountain Valley, CA 92708 (US)**

(74) Representative: **Archer, Philip Bruce**
**Urquhart-Dykes & Lord, Trinity Court, Trinity Street, Priestgate**
**Peterborough, Cambridgeshire PE1 1DA (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# Description

## 1. BACKGROUND AND SUMMARY OF THE INVENTION

The present invention relates to an installation system for securing workpieces of composite materials and the like and to a threaded fastener therefor, including a pin and a nut for use in interference applications in such a system.

Many structures are fastened together with swage type fasteners of a lock bolt type, including a pin and a collar, such as shown in U.S. Patent Nos. 2,531,048 issued to L. C. Huck, on November 21, 1950 for "Fastening Device", RE. 30,445 issued to John H. Ruhl on December 16, 1980 for "Fastener With Proportioned Strength Lock Grooves", and 4,472,096 issued to John Ruhl and Richard D. Dixon on September 18, 1984 for "Optimized Fastener Construction System and Method". Often these fasteners are installed with a preselected desired interference with the openings in the workpieces. Frequently when such structures are repaired, some of the existing fasteners are removed. The process of removing the fasteners and in preparing the fastener openings in the repaired structure results in the openings being made slightly oversized in contrast to their original size. In fastening the repaired structure, in some instances, it is desirable to use fasteners with pins of the same diameter as those originally used. At the same time, it is desirable that the repair fastener provide the desired interference with the workpiece opening. However, in order to compensate for the larger opening, the pin of the repair fastener can be used with a thin gauged sleeve whereby the difference in diameter between the pin and enlarged opening can be accomodated while providing the desired interference.

We have identified a requirement for :

a) a multipieced fastener for securing workpieces via openings therein and a method of installation of such fastener for creating a preselected interference with such workpiece openings ; and/or

b) a fastener for securing workpieces via openings therein with the fastener including a pin, a sleeve and a nut with the pin having a frangible shank portion which can be readily broken away after installation, and a method of installation of such fastener for creating a preselected interference with the workpiece openings ; and/or

c) a fastener for securing workpieces via openings therein with the fastener including a threaded pin, a sleeve and a threaded nut with the pin adapted to be pulled into the sleeve to create a desired interference with the workpiece openings and a method of installation of such fastener for providing the preselected interference with the workpiece openings ; and/or

d) a multipieced fastener for securing workpieces via openings therein where such workpieces are constructed of crushable materials such as composites or the like, and a method of installation of such fastener for creating a preselected interference with the openings in such workpieces ; and/or

e) a fastener for securing workpieces via openings therein and method of installation for creating a preselected interference with such openings in workpieces where the clearance around such openings is limited ; and/or

f) improvements in such fasteners generally.

In US-A-3 066 568 there is disclosed a fastener assembly in which a plastic or flowable sealing element takes up clearances between the shank of the fastener pin and the articles being fastened. A collar is swaged onto the assembly for retention purposes.

US-A-4 048 898 discloses a fastener assembly as defined in the pre-characterising portion of claims 1, 8 and 12 hereof.

According to the invention there is provided a fastener as defined in the accompanying claims.

It should be understood, however, that the present invention is not limited to repair applications.

In a preferred embodiment of the present invention a fastener assembly including a threaded pin and thin gauge sleeve is used with a threaded nut member. The sleeve is dimensioned to be received with a slight clearance in the workpiece openings and is expanded to the desired interference by the pin as the pin is moved axially through the sleeve to its installed position.

In a further preferred embodiment of the invention the axial movement of the pin is effected through a threaded connection by a nut member with the pin. As can be seen from the drawings and the description of the various embodiments, the pin of necessity will have an excess length of threaded shank after installation. In order to eliminate the excess shank lenght and the resulting excess weight and protrusion, the threaded shank is provided with a breakneck groove or weakened portion at which the excess pin shank portion can be severed with a relatively low bending force or axial load.

In another preferred embodiment of the invention, the axial movement is effected by a pull type tool which exerts the required axial force between the pin and the sleeve to cause the relative axial movement and resultant sleeve expansion.

In any of the various forms of the present invention, the final joint can be secured by a nut member threaded onto the pin shank.

The fastener and its method of installation are especially desirable for use with workpieces constructed of crushable materials such as composites or the like. In addition the fastener and method of installation are also desirable in applications where clearance is limited, precluding the use of conventional installation tools.

## 2. BRIEF DESCRIPTION OF THE DRAWINGS

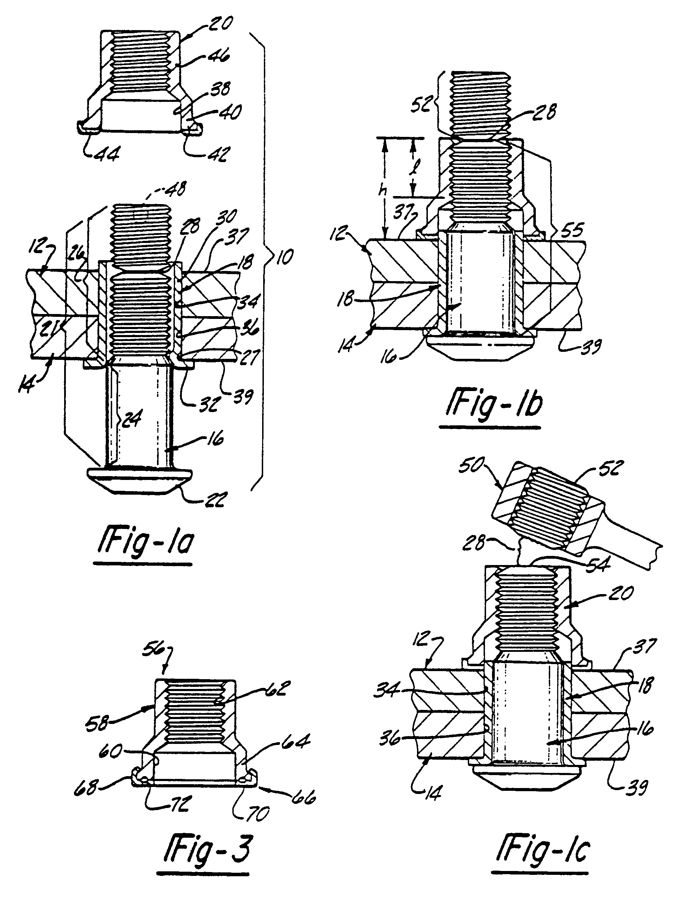

FIGS. 1a, 1b and 1c are elevational views with some parts shown in section and depicting the sequence of installation steps of one form of fastener of the present invention including a pin, a sleeve and a nut in which :

FIG. 1a shows the pin and sleeve preassembled and located in openings in workpieces to be joined with a nut member shown prior to installation ;

FIG. 1b Shows the fastener after the nut member has been secured to the pin and the pin pulled through with sleeve in the workpiece openings ; and

FIG. 1c showns the fastener after an excess portion of the pin shank has been severed.

FIGS. 2a, 2b, 2c and 2d are elevational views with some parts shown in section and depicting the fastener of FIGS. 1a-1c but installed via a different sequence of installation steps in which :

FIG. 2a shows the fastener pin and sleeve preassembled and located in openings in workpieces to be joined with a free running nut to be used as a removable installation tool ;

FIG. 2b shows the pin and the sleeve installed in the workpiece openings via the free running nut tool ;

FIG. 2c shows the excess portion of the pin shank having been severed via the free running nut tool ; and

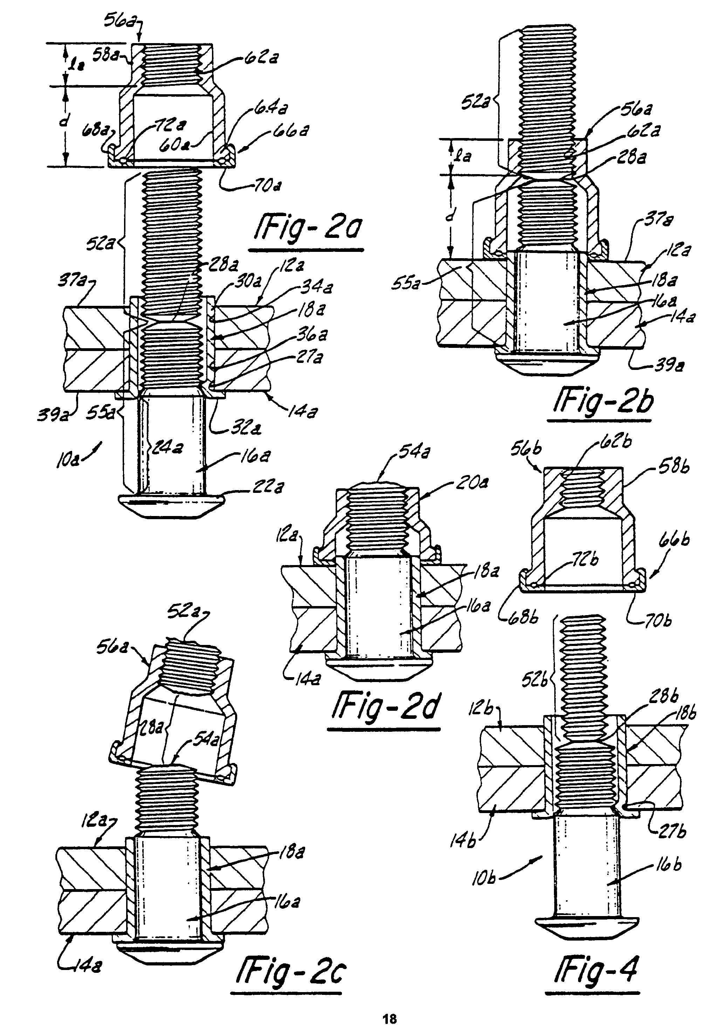

FIG. 2d shows the pin and sleeve finally installed with a fastener nut member.

FIG. 3 is a sectional, elevational view showing a different form of removable, free running nut tool for installation of the fasteners of FIGS. 1a-1c and 2a-2d.

FIG. 4 is an elevational view similar to that of FIG. 2a showing a modified form of the fastener and free running nut tool of FIGS. 2a-2d.

## 3. DESCRIPTION OF THE PREFERRED EMBODIMENT

Looking now to FIGS. 1a-1c a fastener 10 is shown for fastening workpieces 12 and 14A and includes a pin 16, an expansion sleeve 18 and a nut member 20. The fastener 10 is particularly useful where the workpieces 12 and 14 are constructed of crushable materials such as composites, or the like. The composite materials for example can be of a graphite-epoxy composite structure, an aramid fiber reinforced composite structure, or the like. On such aramid fiber reinforced composite structure is produced and sold by E. I. du Pont de Nemours & Co., Inc. under its trademark KEVLAR.

The pin 16 includes an elongated shank 21 which terminates at one end in an enlarged head 22. The shank 21 includes an enlarged smooth shank section 24 adjacent the head 22 and a threaded section 26 at the opposite end of the pin 16. The threaded section 26 is generally uniformly threaded over its lenght except for an annular reduced diameter breakneck groove 28. The breakneck groove 28 is the weakest portion of the pin 16 and is selected to fracture at a desired axial or bending load in a manner to be described.

The threaded section 26 has a maximum diameter which is less than the diameter of the smooth shank section 24.

The expansion sleeve 18 has a generally uniform tubular portion 30 which terminates in an annular flange 32. The sleeve 18 has an internal diameter great enough to move readily over the threaded section 26 but less than the diameter of the smooth pin shank section 24. After preassembly on the pin 16, the sleeve 18 can be partially crimped into the threaded section 26 as at 27 in order to hold the pin 16 and sleeve 18 together thereby facilitating handling. The sleeve 18 can generally be of a type shown and described in the U.S. Patent No. 3.835.615 issued on September 17, 1947 to John O. King, Jr.

The workpieces 12 and 14 are provided with aligned bores 34 and 36, respectively, which, as noted, after a repair operation, have been enlarged. The outside diameter of the sleeve tubular portion 30, in its pre-expanded condition, and the diameter of bores 34 and 36 are selected to provide a snug fit when the tubular portion 30 is located within bores 34 and 36 as shown in FIG. 1a. The desired interference fit with the workpiece bores 34 and 36 will be provided by the radial expansion of the sleeve 18 by the smooth pin shank portion 24. In the manner, the sleeve 18 by shielding the surfaces of bores 34 and 36 from the pin shank portion will inhibit delamination of the composite materials as the pin shank portion 24 is pulled into the sleeve 18 to radically expand to the desired interference fit with the bores 34 and 36.

The fastener 10, with a pin 16 having a shank 21 of a predetermined length can be selected to fasten together workpieces 12 and 14 having a grip varying in total thickness from a minimum to a maximum total thickness. Since it is desirable to have the sleeve tubular portion 30 cover or shield the surfaces of bores 34 and 36 over the entire grip range, the tubular portion 30 for workpiece thicknesses less than the maximum total thickness, will protrude beyond the outer surface 37 of the workpiece 12. In order to accomodate this condition the nut 20 is provided with an enlarged counterbore 38 having a diameter slightly larger than the outside diameter of the sleeve tubular portion 30 and which has an axial depth sufficient to accept the maximum protrusion of the sleeve tubular portion 30. The counterbore 38 is formed in an enlarged, generally annular head portion 40 of the nut member 20. The head portion 40 terminates in an enlarged flange 42 which has a large bearing area preselected to provide adequate load distribution to inhibit localized delamination and/or crushing of the composite material of the outer surface 37 of workpiece 12. The nut member 20 is also provides with a facing washer 44 which is made of a material compatible with the composite material of workpiece 12 and which has good relative lubricity characteristics whereby the delamination noted is further inhibited. The opening through the facing washer 44 is of a diameter closely proximating the diameter bore 34 of the engaged workpiece 12. Thus the facing washer 44 will support the surface surrounding the bore 34 to also further inhibit delamination as the pin shank portion 24 is pulled into the sleeve 18 to radially expand it as previously discussed.

The nut member 20 has a reduced diameter portion 46 which is internally threaded to threadably engage the threaded section 26 of the pin shank 21. The threaded nut section 46 has an irregular external surface adapted to be gripped by a wrench. In one from of the invention the nut member 20 was formed to have a prevailing torque characteristic.

To install the fastener 10, the pin 16 and sleeve 18, as preassembled thereto, are assembled in workpiece openings 34 and 36. A sufficient length of the pin threaded section 26 extends beyond the outer surface 37 of workpiece 12 such that the threaded nut section 46 can engage a suitable number of threads at the end of threaded pin section 26. As the nut member 20 is threaded onto the pin 16, the smooth pin shank section 24 will be pulled into the expansion sleeve 18 causing it to expand radially ouwardly. The magnitude of this expansion is determined by the selection of the diameter of smooth pin shank portion 24 relative to the wall thickness of the sleeve tubular portion 30 and the diameters of workpiece bores 34 and 36. Note that the threaded pin section 26 is continuously threaded over its length and accross the breakneck groove 28 to permit the nut member 20 to be fully threaded across the threaded pin section 26.

Thus the nut member 20 is threaded onto the pin 16 until the movement of the smooth pin shank section 20 into the expansion sleeve 18 has been completed and the pin head 22 has engaged the sleeve flange 32 against the rear workpiece surface 39. At this point the nut member 20 is tightened to a preselected torque to provide the desired clamping force between workpieces 12 and 14. A hexagonal or other irregularly shaped bore 48 is located in the free end of the pin shank 21 and is adapted to receive a suitable tool to prevent rotation of the pin 16 as the nut member 20 is torqued onto the pin 16. It should be noted that other anti-rotation structures could be employed.

With the fastener 10 fully torqued, the breakneck groove 28 will be located at or adjacent to the outer end of the nut member 20. Next a removal tool 50 is placed over that threaded end portion 52 which extends beyond the breakneck groove 28 ; with the application of a relatively low axial or bending force, the threaded end portion 52 will be broken away from the pin shank 21 at the breakneck groove 28. This will leave the terminal end 54 of the pin shank 21 substantially flush with the outer end of the nut member 20. In order to assure this flush break condition, the axial length of the pin shank portion 55 from the pin head 22 to the breakneck groove 28 is selected to be equal to the sum of the height "h" of the nut member 20, the maximum thickness of the workpieces 12 and 14 to be joined and the thickness of sleeve flange 32. The axial length of the frangible end portion 52 will be generally no greater than the axial length "l" of the threaded nut section 46 of nut member 20 and no less than around one half the axial length "l" of the threaded nut section 46. At the same time the axial length of the smooth pin shank portion 24 will be generally equal to the maximum total thickness of the workpieces 12 and 14 to be joined.

As noted the breakneck groove 28 represents the weakest portion of the pin 16. It is desirable, however, that the breakneck groove 28 fracture at a relatively low load to facilitate removal of the frangible pin shank end portion 52. At the same time the breakneck groove 28 must have sufficient strength to accept the axial load applied by the nut member 20 as the pin 10 is initially pulled into the expansion sleeve 18 and the smooth pin shank section 24 radially expands that sleeve 18 to provide the desired interference fit with the workpiece bores 34 and 36. In one from of the invention the axial load at which the breakneck groove 28 will fracture does not exceed a magnitude which is around twenty (20%) percent greater than the maximum axial load required to pull the pin shank section 24 into the sleeve 18 and to effect the desired radial expansion in the workpiece bores 34 and 36. Note that breakneck grooves have been ordinarily used for swage type fasteners of the kind previously discussed. There the breakneck grooves were designed to accept an axial load greater than the final load desired to clamp the workpieces together. Here, however, the excess length resulting from the frangible threaded end portion 52 is provided only to permit gripping of the pin shank 21 so that the expansion of the sleeve 18 can be accomplished in the manner described. Thus here the breakneck groove 28 is performing a singular, limited function which is different from that with swage type fasteners. Thus the breakneck groove 28 of the present invention is selected to have a strength significantly less than the final desired clamp load for workpieces 12 and 14 i.e. the clamp load attained by the final application of the nut member 20 to the pin 16. In one form of the invention the tensile fracture load for breakneck groove 28 was 50% of the final ultimate tensile load for the set fastener. It is desirable that the breakneck groove 28 have a tensile load no greater than around 50% in order to facilitate the removal of that portion after pull in of the pin.

Thus with the fastener 10 as installed in composite workpieces 12 and 14 in the manner shown in FIGS. 1a-1c, an interference fit can be provided with workpiece bores 34 and 36. Note also that since installation is provided by the threaded construction described, this fastener 10 can be used in applications having limited clearance where such limited clearance would restric access by conventional pull tools.

In one form of the invention for use with workpieces 12 and 14 of composite materials the pin 16 was constructed of 6A1-4V Titanium alloy at 11,273 kg/cm² (160,000 pounds/inch²) or (160 KSI) minimum ultimate tensile ; the sleeve 18 was constructed of A286 corrosion resistant steel 5636 kg/cm² (80 KSI) minimum ultimate tensile ; and the nut member 20 was constructed of mil-S-5000 4340 alloy steel 11,273 kg/cm² (160 KSI) minimum ultimate tensile. For workpieces 12 and 14 having bores 34 and 36 with a nominal diameter of 6.72 millimetres (1/4" (.2645")) a pin 16 was selected to have a smooth shank section 24 with a nominal diameter of 6.40 millimetres (1/4" (.252")). The sleeve 18 had a nominal wall thickness of 0.20 millimetres (.008") to provide a nominal interference of 0.08 millimetres (.003") with workpieces bores 34 and 36.

It may be desirable to utilize a separate removable wrenching tool to pull the pin 16 into the sleeve 18. This can be accomplished via a free running nut tool 56 such as is shown in FIG. 3. The nut tool 56 can be of a configuration similar to that of the nut member 20 and as such has a nut body 58 with a counterbore 60 and an internally threaded section 62 having an irregular external surface adapted to be gripped by a suitable wrenching device. The counterbore 60 of the nut body 58 is formed in a enlarged annular head portion 64 which has rotatably fixed thereto a bearing washer assembly 66 having a cupped washer 68 terminating in a flat workpiece engaging surface 70. A bearing assembly 72 is located axially between the end of the head portion 64 of nut body 58 and the bearing washer 68 to facilitate relative rotation therebetween. As with the nut member 20, the opening through the support surface 70 is of a diameter closely proximating the diameter of bore 34 of workpiece 12 to provide the desired support to inhibit delamination when the pin 16 is pulled into the sleeve 18.

Thus for installation of a fastener such as fastener 10, the nut tool 56 is threaded onto the threaded pin shank section 26 ; the washer engaging surface 70 onto when in engagement with workpiece surface 37 will be inhibited from rotation relative rotation of the nut body 58. Thus the pin 16 can be pulled into the sleeve 18 and the workpieces 12 and 14 pulled tightly together without marring the surface 37 by rotation of the nut body 58. After the pin 16 has been fully pulled into the expansion sleeve 18, the nut tool 56 can be readily removed and the nut member 20 applied. Rotation of the nut member 20 will be limited to the amount sufficient to provide the desired torque and hence clamp load between workpieces 12 and 14. With this accomplished the frangible threaded shank end portion 52 is removed via tool 50 in the manner previously noted. Of course, the nut tool 56 can be continuously reused.

Another form of the invention is shown in FIGS. 2a-2d ; in the discussion of this embodiment components similar to like components in the embodiments of FIGS. 1a-1d and FIG. 3 have been given the name numeral designation with the addition of the letter postcript "a". For purposes of simplicity all such similar components have not been described again but are designated in the drawing of FIGS. 2a-2d.

Looking now to FIGS. 2a-2d fastener 10a is shown for fastening workpieces 12a and 14a.

To install the fastener 10a, the pin 16a and sleeve 18a, as preassembled thereto, are assembled in workpiece openings 34a and 36a. Again a sufficient length of the pin threaded section 26a extends beyond the outer surface 37a of workpiece 12a such that a suitable number of threads can be engaged at the end of threaded pin section 26a by a modified form of the free running nut tool of FIG. 3. Thus in FIGS. 2a-2c a modified free running tool 56a is shown. The nut tool 56a has a nut body 58a with a counterbore 60a and with an internally threaded section 62a having an irregular external surface adapted to be gripped by a suitable wrenching device. Here the counterbore 60a of the nut body 58a is formed in an enlarged annular head portion 64a which is substantially elongated for a purpose to be described. Rotatably fixed to the end of the head portion 64a is a bearing washer assembly 66a having a cupped washer 68a terminating in a flat workpiece engaging and support surface 70a. A bearing assembly 72a is located axially between the end of the head portion 64a and the bearing washer 68a to facilitate relative rotation therebetween. The support surface 70a is configured similarly to surface 70 to inhibit delamination as noted.

In this embodiment the frangible pin shank portion 52a will be severed by the axial load applied by the installation nut tool 56a. However, to accomplish this, the internally threaded section 62a of nut body 58a must be spaced a sufficient distance from the engaged workpiece surface 37a such that it will not threadably engage the threaded portion of threaded shank section 26a on the pin head side of the breakneck groove 28a. Thus now the enlarged head portion 64a is formed to space the beginning of the nut threaded section 62a a distance "d" from the workpiece surface 37a where the workpieces 12a and 14a are of a minimum total thickness such that no threads on the opposite side of the breakneck groove 28a will be engaged by nut threaded section 62a. The distance "d" is equal to the length 55a of the pin shank 16a less the minimum total thickness of the workpieces 12a and 14a. In order to accomplish this, the length of the frangible pin shank portion 52a must be increased (relative to the length of portion 52 of FIGS. 1a-1c) such that its axial length will be equal to the dimension "d" plus at least one half of the length "1a" of the nut threaded section 62a.

Thus for installation of a fastener such as fastener 10a, the nut tool 56a, is threaded onto the frangible pin shank portion 52a of the threaded pin shank section 26a. The pin 16a will be pulled into the sleeve 18a and the workpieces 12a and 14a pulled tightly together by rotation of the nut body 58a. After the pin 16a has been fully pulled into the expansion sleeve 18a, increased torque is continued to be applied to the nut body 58a until the axial load on the breakneck groove 28a reaches the magnitude at which it is selected to fracture. Now the nut tool 56a is separated from the remainder of fastener 10a and the nut member 20a (similar the nut member 20 of FIGS. 1a-1c) can be applied to complete the installation. By simply removing the severed portion 52a, the nut tool 56a can be used again.

As noted the nut tool 56a is adapted to sever the threaded shank portion 52a at a substantially lower load than would be required if a swage action were to be performed as with swage type fasteners ; see U.S. Patent No. 3,025,730 issued to H. G. Brilmyer et al on March 20, 1962 for "Driving Tool For Applying Torque Driven Lockbolt Fasteners".

Note that with the fastener and apparatus of FIGS. 2a-2d, the thread form on the frangible shank portion 52a need not be compatible with the thread form on the remainder of the threaded shank section 26a and in fact may be formed coarser to facilitate load transmission and reduce time in pulling the pin 16a for the expansion portion of the installation cycle. At the same time since relatively low axial loads are imposed at this portion of the installation cycle, the diameter of the frangible, disposable shank portion 52a can be reduced resulting in cost savings in material. Such a fastener and apparatus is shown in FIG. 4 where components similar to like components in the embodiments of FIGS. 2a-2d have been given the same numeral designations with the addition of the letter postcript "b". For purposes of simplicity all such similar components have not been described again but are designated in the drawing of FIG. 4.

Thus in FIG. 4 the fastener 10b is identical to fastener 10a of FIGS. 2a-2d except that the frangible shank portion 52b is of a smaller diameter and has a coarser thread to facilitate the pulling action. Similarly, the nut tool 58b is identical to nut tool 58a except that the internally threaded section 62b is of a reduced diameter and thread form to accomodate the frangible shank portion 52b. After pulling the pin 16b into the sleeve 18b and severing the frangile shank portion 52b, a nut member such as nut member 46a can be applied to complete the installation.

Thus a unique fastener and method of installation have been provided for installing fasteners with an interference fit in openings in composite materials.

## Claims

1. A fastener (10, 10a, 10b) for securing together a plurality of workpieces (12, 14, 12a, 14a, 12b, 14b) of a composite type material and adapted to be located in aligned bores (34, 36, 34a, 36a) in such workpieces (12, 14, 12a, 14a, 12b, 14b) with a preselected interference fit and with the fastener (10, 10a, 10b) adapted to secure such workpieces (12, 14, 12a, 14a, 12b, 14b) varying in total thickness from a preselected maximum to a preselected minimum total thickness, said fastener (10, 10a, 10b) comprising :

a pin member (16, 16a, 16b) having an elongated shank (21) and an enlarged head (22, 22a) at one end ;

said pin member (16, 16a, 16b) having an enlarged diameter smooth shank section (24, 24a) adjacent said pin head (22, 22a) ;

said pin member (16, 16a, 16b) having a threaded portion adjacent to said smooth shank section (24, 24a), said threaded portion (52, 52a, 52b) having a maximum diameter less than the diameter of said smooth shank section (24, 24a) ;

a thin gauged expansion sleeve (18, 18a, 18b) having a tubular portion (30, 30a) ;

said sleeve (18, 18a, 18b) having an inside diameter greater than said maximum diameter of said threaded pin portion, and less than the diameter of said smooth shank section (24, 24a) ;

said tubular portion (30, 30a) of said sleeve (18, 18a, 18b) having a length no less than around the maximum total thickness of the workpieces (12, 14, 12a, 14a, 12b, 14b), and having an outside diameter permitting assembly of said sleeve (18, 18a, 18b), with said pin member (16, 16a, 16b) attached, into the workpiece bores (34, 36, 34a, 36a) ;

a nut member (20, 20a, 56) having a threaded nut section (46, 62) at one end and an enlarged head portion (40, 42, 64) at its opposite end, said threaded nut section (46, 62) having a preselected axial length (1, 1a), said nut member (20, 20a, 56, 56a, 56b) having a preselected overall axial height (h, 1a + d) ; and

said threaded nut section (46, 62) of said nut member (20, 20a, 56) having threads formed for threaded engagement onto said threaded portion ; characterised in that

said pin member (16, 16a, 16b) comprises a pull portion (52, 52a, 52b) extending generally from said threaded portion (26) to the opposite end of said pin member (16, 16a, 16b) ;

a breakneck groove (28, 28a, 28b) is located between said threaded portion and said pull portion (52, 52a, 52b) whereby said pull portion defines a frangible portion (52, 52a, 52b) at the free end of said shank (21) ;

said breakneck groove (28, 28a, 28b) being the weakest section of said pin member (10, 10a, 10b) and adapted to fracture at a preselected load ;

said thin gauged expansion sleeve (18, 18a, 18b) having an enlarged annular flange (32, 32a) at one end ;

said inside diameter of said sleeve (18, 18a, 18b) being greater than the maximum diameter of said pull portion (52, 52a, 52b) ;

said enlarged head portion (40, 42, 64) having an enlarged counterbore (38, 60) having a diameter greater than the outside diameter of said tubular portion (30) of said sleeve (18, 18a, 18b), said counterbore (38, 60) having an axial depth at least equal to the maximum extension of said sleeve tubular portion (30, 30a) beyond the workpieces (12, 14, 12a, 14a, 12b, 14b) for workpieces (12, 14, 12a, 14a, 12b, 14b) of minimum total thickness ;

said pin member (16, 16a) having the length of that portion (52a) of said pin shank (21) from said pin head (22, 22a) to said breakneck groove (28, 28a, 28b) being no greater than around the sum of the maximum total thickness of the workpieces (12, 14, 12a, 14a, 12b, 14b) said preselected height (h, 1a + d) of said nut member (20, 20a, 56, 56a, 56b) and the thickness of said sleeve flange (32, 32a) ;

said pull portion (52, 52a, 52b) having a grooved form adapted to be gripped for applying a relative axial pulling force between the said pin member (16, 16a, 16b) and said sleeve (18, 18a, 18b) ; and

said breakneck groove (28, 28a, 28b) having an axial strength at least equal to the maximum axial load required to pull said pin member (16m 16a, 16b) fully into said sleeve (18, 18a, 18b) with said smooth pin shank section (24, 24a) expanding said sleeve (18, 18a, 18b) into the workpiece bores (34, 36, 34a, 36a) to provide the preselected interference fit.

2. The fastener of claim 1 with said pull portion (52b) being of a diameter smaller than said threaded portion of said pin (10b).

3. The fastener of any of claims 1 and 2 with said pull portion (52b) being formed with threads coarser than those on said threaded portion.

4. The fastener of any of claims 1, 2 and 3 with said nut member (20, 20a, 56) having a bearing and support surface (44, 70) at said enlarged head portion (40, 42, 64, 64a), said bearing and support surface (44, 70) having an opening of a diameter closely proximating the diameter of bore (34, 34a) of the engaged one (12, 12a, 12b) of the workpieces (12, 14, 12a, 14a, 12b, 14b) whereby the surface surrounding the bore (34, 34a) of that workpiece (12, 12a, 12b) is supported delamination inhibited as said sleeve (18, 18a, 18b) is radially expanded by axial movement of said pin member (16, 16a, 16b).

5. The fastener of any of claims 1 and 4 with said threaded portion and said pull portion (52, 52a) defining a threaded section (25) extending generally from said smooth shank section (24, 24a) to the opposite end of said pin member (16, 16a)

said threaded pin section (27) being continuously threaded over its full length whereby said nut member (20, 20a, 56) can be threaded onto said threaded pin section (26) and across said breakneck groove (28, 28a) past said frangible portion (52, 52a) and into that portion of said threaded section (26) on the pin head side of said breakneck groove (28, 28a),

said frangible portion (52, 52a) having a thread form adapted to be threadably gripped for applying a relative axial, pulling force between said pin member (16, 16a) and said sleeve (18, 18a).

6. The fastener of any of claims 1, 4 and 5 with said nut member (20) being adapted to be torqued onto said pin member (16) to pull said pin member (16) into said sleeve (18) to cause said radial expansion and to be continued to be torqued to apply the final desired clamp load.

7. The fastener of any of claims 1-6 with said breakneck groove (28, 28a, 28b) having an axial strength no greater than around twenty (20%) percent greater than said maximum axial load whereby said frangible portion (52, 52a, 52b) of said shank (21) can be severed from said shank (21) at a minimum axial load.

8. A fastener (10, 10a, 10b) for securing together a plurality of workpieces (12, 14, 12a, 14a, 12b, 14b) of a composite type material and adapted to be located in aliged bores (34, 46, 34a, 36a) in such workpieces (12, 14, 12a, 14a, 12b, 14b) with a preselected interference fit and with the fastener (10, 10a, 10b) adapted to secure such workpieces (12, 14, 12a, 14a, 12b, 14b) varying in total thickness from a preselected maximum to a preselected minimum total thickness, said fastener (10, 10a, 10b) comprising :

a pin member (16, 16a, 16b) having an elongated shank (21) and an elongated head (22, 22a) at one end ;

said pin member (16, 16a, 16b) having an enlarged diameter smooth shank section (24, 24a) adjacent said pin head (22, 22a) ;

said pin member (16, 16a, 16b) having a threaded section (26) extending generally from said smooth shank section (24, 24a) to the opposite end of said pin member (16, 16a, 16b) ;

said threaded pin section (26) having a maximum diameter less than the diameter of said smooth shank section (24, 24a) ;

a thin gauged expansion sleeve (18, 18a, 18b) having a tubular portion (30, 30a) ;

said sleeve (18, 18a, 18b) having an inside diameter greater than said maximum diameter of said threaded pin section (26) and less than the diameter of said smooth shank section (24, 24a) ;

said tubular portion (30, 30a) of said sleeve (18, 18a, 18b) having a length no less than around the maximum total thickness of the workpieces (12, 14, 12a, 14a, 12b, 14b), and having an outside diameter permitting assembly of said sleeve (18, 18a, 18b) with said pin member (16, 16a, 16b) attached, into the workpiece bores (34, 36, 34a, 36a) ;

a nut member (20, 20a) having a threaded nut section (46, 62) at one end and an enlarged head portion (40, 42, 64) at its opposite end, said threaded nut section (46, 62) having a preselected axial length (1, 1a) ; characterised in that

a breakneck groove (28, 28a, 28b) is located within said threaded section (26) to define a frangible portion (52, 52a, 52b) at the free end of said threaded section (26) ;

said breakneck groove (28, 28a, 28b) being the weakest section of said pin member (10, 10a, 10b) and adapted to fracture at a preselected load of generally low magnitude ;

said thin gauged expansion sleeve (18, 18a, 18b) having an enlarged annular flange (32, 32a) at one end ;

said enlarged head portion (46, 42, 64) having an enlarged counterbore (38, 60) having a diameter greater than the outside diameter of said tubular portion (30, 30a) of said sleeve (18, 18a, 18b), said counterbore (38, 60) having an axial depth at least equal to the maximum extension of said sleeve tubular portion (30, 30a) beyond the workpieces (12, 14, 12a, 14a, 12b, 14b) for workpieces (12, 14, 12a, 14a, 12b, 14b) of minimum total thickness ;

said frangible portion (52, 52a, 52b) of said threaded section (26) having an axial length no less than around one half of the axial length of said threaded nut section (46, 62), said nut member (20, 20a) having a preselected overall axial height (h, 1a+d) ;

said pin member (16, 16a, 16b) having the length of that portion (55a) of said pin shank (21) from said pin head (22, 22a) to said breakneck groove (28, 28a, 28b) being no greater than around the sum of the maximum total thickness of the workpieces (12, 14, 12a, 14a, 12b, 14b) said preselected height (h, 1a+d) of said nut member (20, 20a) and the thickness of said sleeve flange ;

said threaded nut section (46, 62) of said nut member (20, 20a) having threads formed for threaded engagement onto that portion of said threaded section (26) on the pin head side of said breakneck groove (28, 28a, 28b) ;

said frangible portion (52, 52a, 52b) having a thread form adapted to be threadably gripped for applying a relative axial, pulling force between said pin member (16, 16a, 16b) and said sleeve (18, 18a, 18b) ;

said breakneck groove (28, 28a, 28b) having an axial strength at least equal to the maximum axial load required to pull said pin member (16, 16a, 16b) fully into said sleeve (18, 18a, 18b) with said smooth pin shank section (24, 24a) expanding said sleeve (18, 18a, 18b) into the workpiece bores (34, 36, 34a, 26a) to provide the preselected interference fit, said breakneck groove (28, 28a, 28b) having an axial strength no greater than around twenty (20%) percent greater than said maximum axial load whereby said frangible portion (52, 52a, 52b) of said shank (21) can be severed from said shank (21) at a minimum axial load.

9. The fastener (10) of claim 8 with said nut member (20) being adapted to be torqued onto said pin member (16) to pull said pin member (16) into said sleeve (18) to cause said radial expansion and to be continued to be torqued to apply the final desired clamp load.

10. The fastener (10, 10a, 10b) of claim 8 adapted to be pulled by a tool nut member (56, 56a, 56b) having a threaded nut portion (62, 62a, 62b) at one end and an enlarged head section (64, 64a) at its opposite end, the enlarged head section (64, 64a) having an enlarged counterbore portion (60, 60a) having a diameter greater than the outside diameter of said tubular portion (30, 30a) of said sleeve (18, 18a, 18b), said counterbore portion (60, 60a) having an axial depth at least equal to the maximum extension of said sleeve tubular portion (30, 30a) beyond the workpieces (12, 14, 12a, 14a, 12b, 14b) for workpieces (12, 14, 12a, 14a, 12b, 14b) of minimum total thickness, the threaded nut portion (62, 62a, 62b) having a preselected axial length (1a), the enlarged head section (64, 64a) having a predetermined length (d) at least equal to the distance of said breakneck groove (28, 28a, 28b) from the outer workpiece surface (37, 37a) for a minimum total thickness of the worckpieces (12, 14, 12a, 14a, 12b, 14b) to preclude threaded engagement of the threaded nut portion (62, 62a, 62b) with that portion of said threaded section (26) on the pin head site of said breakneck groove (28, 28a, 28b), said frangible portion (52, 52a, 52b) of said threaded section (26) having an axial length greater than said predetermined length (d).

11. The fastener of any of claims 8, 9 and 10 with said breakneck groove (28, 28a, 28b) having an axial strength no greater than around twenty (20%) percent greater than said maximum axial load whereby said frangible portion (52, 52a, 52b) of said shank (21) can be severed from said shank (21) at a minium axial load.

12. A fastener for securing together a plurality of workpieces of a composite type material and adapted to be located in aligned bores in such workpieces with a preselected interference fit and with the fastener adapted to secure such workpieces varying in total thickness from a preselected maximum to a preselected minimum total thickness, the fastener including a pin member, a thin gauge expansion sleeve surrounding the pin and adapted to be expanded by the pin during installation into interference fit with such workpieces, and a nut member ;

said pin member having an elongated shank and an enlarged head at one end, an enlarged diameter smooth shank section adjacent said pin head, a threaded section extending generally from said smooth shank section to the opposite end of said pin member ;

said threaded pin section having a maximum diameter less than the diameter of said smooth shank section ;

a thin gauge expansion sleeve having a tubular portion, said sleeve having an inside diameter greater than said maximum diameter of said threaded pin section and less than the diameter of said smooth shank section ;

said tubular portion of said sleeve having a length no less than around the maximum total thickness of the workpieces, and having an outside diameter permitting assembly of said sleeve, with said pin member attached, into the workpiece bore ;

said nut member having a threaded nut section at one end and an enlarged head portion at its opposite end and a preselected overall axial height ; characterised in that

said pin member having a breakneck groove located within said threaded section to define a frangible portion at the free end of said threaded section, said breakneck groove being the weakest section of said pin member and adapted to fracture at a preselected load of generally low magnitude ;

said thin gauged expansion sleeve having an annular flange at one end ;

said enlarged head portion having an enlarged counterbore having a diameter greater than the outside diameter of said tubular portion of said sleeve, said counterbore having an axial depth at least equal to the maximum extension of said sleeve tubular portion beyond the workpieces for workpieces of minimum total thickness, said threaded nut section having a preselected axial length ;

said frangible portion of said threaded section having an axial length no less than around one half of the axial length of said threaded nut section ;

said pin member having the length of that portion of said pin shank from said pin head to said breakneck groove no greater than around the sum of the maximum total thickness of the workpieces, said preselected height of said nut member and the thickness of said sleeve flange ;

said threaded pin section being continuously threaded over its full length whereby said nut member can be threaded onto said threaded pin section and across said breakneck groove past said frangible portion and onto that portion of said threaded section on the pin head side of said breakneck groove ; and

said breakneck groove having an axial strength at least equal to the maximum axial load required to pull said pin member fully into said sleeve with said smooth pin shank section expanding said sleeve into the workpiece bores to provide the preselected interference fit.

13. The fastener of claim 12 with said installation member being said nut member and with said frangible portion being separately severed after said nut member has been torqued to pull said pin member to cause the radial expansion of said sleeve.

14. The fastener of claim 12 with said installation member being applied only to said frangible portion and being torqued after the radial expansion of said sleeve to a magnitude to sever said frangible portion and applying said nut member onto that portion of said threaded section on the pin head said of said breakneck groove and torquing it to attain the desired clamp load between the workpieces.

15. The fastener of any of claims 12 to 14 with said breakneck groove having an axial strength no greater than around twenty (20%) percent greater than said maximum axial load.

16. The fastener of claim 15 with said enlarged head section of said installation member having a support surface closely surrounding the bore of the engaged workpiece to provide support thereto whereby delamination is inhibited as said sleeve is radially expanded by axial movement of said pin member.

## Ansprüche

1. Befestigungseinrichtung (10, 10a, 10b), um eine Vielzahl von Werkstücken (12, 14, 12a, 14a, 12b, 14b) aus einem Verbundtypmaterial fest miteinander zu verbinden, die geeignet ist, in fluchtenden Bohrungen (34, 36, 34a, 36a) in solchen Werkstücken (12, 14, 12a, 14a, 12b, 14b) mit einer vorgewählten Preßpaßsitz lokalisiert zu werden, wobei die Befestigungseinrichtung (10, 10a, 10b) geeignet ist, solche Werkstücke (12, 14, 12a, 14a, 12b, 14b), die in der Gesamtdicke von einem vorgewählten Maximum bis zu einer vorgewählten minimalen Gesamtdicke variieren, fest miteinander zu verbinden, wobei die Befestigungseinrichtung (10, 10a, 10b) umfaßt :-

ein Bolzenglied (16, 16a, 16b) mit einem langgestreckten Schaft (21) und einem verbreiterten Kopf (22, 22a) an einem Ende ;

wobei das Bolzenglied (16, 16a, 16b) einen Glattschaftbereich (24, 24a) mit verbreitertem Durchmesser angrenzend an den Bolzenkopf (22, 22a) aufweist ;

wobei das Bolzenglied (16, 16a, 16b) einen Gewindeabschnitt angrenzend an den Glattschaftbereich (24, 24a) aufweist, der Gewindeabschnitt (52, 52a, 52b) einen maximalen Durchmesser geringer als der Durchmesser des Glattschaftbereiches (24, 24a) aufweist ;

eine dünn bemessene Expansionshülse (18, 18a, 18b) mit einem rohrförmigen Abschnitt (30, 30a) ;

wobei die Hülse (18, 18a, 18b) einen Innendurchmesser größer als der maximale Durchmesser des Gewindebolzenabschnitts und geringer als der Durchmesser des Glattschaftbereichs (24, 24a) aufweist ;

wobei der rohrförmige Abschnitt (30, 30a) der Hülse (18, 18a, 18b) eine Länge nicht geringer als etwa die maximale Gesamtdicke der Werkstücke (12, 14, 12a, 14a, 12b, 14b) hat und einen Außendurchmesser aufweist, der den Zusammenbau dieser Hülse (18, 18a, 18b) mit dem angebrachten Bolzenglied (16, 16a, 16b) in die Werkstückbohrungen (34, 36, 34a, 36a) zuläßt ;

ein Mutterglied (20, 20a, 56) mit einem Gewindemutterbereich (46, 62) an einem Ende und einem verbreiterten Kopfabschnitt (40, 42, 64) an seinem entgegengesetzten Ende, wobei der Gewindemutterabschnitt (46, 62) eine vorgewählte axiale Länge (1, 1a), das Mutterglied (20, 20a, 56, 56a, 56b) eine vorgewählte gesamte axiale Höhe (h, 1a+d) aufweist und

wobei der Gewindemutterabschnitt (46, 62) des Muttergliedes (20, 20a, 56) Gewinde aufweist, die für einen Gewindeeingriff auf dem Gewindeabschnitt ausgebildet sind ; dadurch **gekennzeichnet**, daß

das Bolzenglied (16, 16a, 16b) einen Zugabschnitt (52, 52a, 52b) umfaßt, der sich im allgemeinen von dem Gewindeabschnitt (26) zu dem entgegengesetzten Ende des Bolzengliedes (16, 16a, 16b) erstreckt ;

eine Bruchkehlennut (28, 28a, 28b) zwischen dem Gewindeabschnitt und dem Zugabschnitt (52, 52a, 52b) gelegen ist, so daß der Zugabschnitt einen brechbaren Abschnitt (52, 52a, 52b) an dem freien Ende des Schaftes (21) definiert ;

die Bruchkehlennut (28, 28a, 28b) der schwächste Abschnitt des Bolzengliedes (16, 16a, 16b) ist und geeignet ist, bei einer vorgewählten Belastung zu brechen ;

die dünn bemessene Expansionshülse (18, 18a, 18b) einen verbreiterten Ringflansch (32, 32a) an einem Ende aufweist ;

der Innendurchmesser der Hülse (18, 18a, 18b) größer als der maximale Durchmesser des Zugabschnitts (52, 52a, 52b) ist ;

der verbreiterte Kopfabschnitt (40, 42, 64) eine verbreiterte Gegenbohrung bzw. Senkbohrung (38, 60) umfaßt, die einen Durchmesser größer als der Außendurchmesser des rohrförmigen Abschnittes (30) der Hülse (18, 18a, 18b) aufweist, wobei die Senkbohrung (38, 60) eine axiale Tiefe zumindest gleich der maximalen Erstreckung des Hülsenrohrabschnittes (30, 30a) jenseits der Werkstücke (12, 14, 12a, 14a, 12b, 14b) für Werkstücke (12, 14, 12a, 14a, 12b, 14b) mit minimaler Gesamtdicke hat ;

das Bolzenglied (16, 16a) die Länge des Abschnittes (52a) des Bolzenschaftes (21) von dem Bolzenkopf (22, 22a) zu der Bruchkehlennut (28, 28a, 28b) aufweist, die nicht größer als etwa die Summe aus der maximalen Gesamtdicke der Werkstücke (12, 14, 12a, 14a, 12b, 14b), der vorgewählten Höhe (h, 1a+d) des Muttergliedes (20, 20a, 56, 56a, 56b) und der Dicke des Hülsenflansches (32, 32a) ist ;

der Zugabschnitt (52, 52a, 52b) eine mit Nuten versehene Form aufweist, die geeignet ist, ergriffen zu werden für das Anlegen einer relativen axialen Zugkraft zwischen dem Bolzenglied (16, 16a, 16b) und der Hülse (18, 18a, 18b) ; und

die Bruchkehlennut (28, 28a, 28b) eine axiale Zugfestigkeit zumindest gleich der maximalen axialen Last aufweist, die erforderlich ist, das Bolzenglied (16, 16a, 16b) vollständig in die Hülse (18, 18a, 18b) zu ziehen, wobei der Glattschaftbereich (24, 24a) des Bolzens die Hülse (18, 18a, 18b) in die Werkstückbohrungen (34, 36, 34a, 36a) ausdehnt, um den vorgewählten Preßsitz bzw. Preßpaßsitz vorzusehen.

2. Befestigungseinrichtung nach Anspruch 1, bei welcher der Zugabschnitt (52b) einen Durchmesser kleiner als der Gewindeabschnitt des Bolzens (10b) aufweist.

3. Befestigungseinrichtung nach Anspruch 1 oder 2, bei der der Zugabschnitt (52b) mit Gewinden ausgebildet ist, die grober als die auf dem Gewindeabschnitt sind.

4. Befestigungseinrichtung nach einem der Ansprüche 1, 2 und 3, bei welcher das Mutterglied (20, 20a, 56) eine Lager-und Abstützfläche (44, 70) an dem verbreiterten Kopfteil (40, 42, 64, 64a) aufweist, wobei die Lager- und Abstützfläche (44, 70) eine Öffnung mit einem Durchmesser aufweist, der sich dem Durchmesser der Bohrung (34, 34a) des in Eingriff genommenen (12, 12a, 12b) der Werkstücke (12, 14, 12a, 14a, 12b, 14b) eng annähert, so daß die Oberfläche, die die Bohrung (34, 34a) des Werkstückes (12, 12a, 12b) umgibt, in einer eine Schichtentrennung verhindernden Weise gestützt ist, wenn die Hülse (18, 18a, 18b) durch axiale Bewegung des Bolzengliedes (16, 16a, 16b) radial ausgedehnt wird.

5. Befestigungseinrichtung nach einem der Ansprüche 1 und 4, wobei der Gewindeabschnitt und der Zugabschnitt (52, 52a) einen Gewindebereich (26) definieren, der sich im allgemeinen von dem Glattschaftbereich (24, 24a) zu dem entgegengesetzten Ende des Bolzengliedes (16, 16a) erstreckt, wobei der Gewindebolzenbereich (26) kontinuierlich über seine volle Länge mit Gewinde ausgebildet ist, so daß das Mutterglied (20, 20a, 56) auf den Gewindebolzenbereich (26) aufgeschraubt und über die Bruchkehlennut (28, 28a) hinweg an dem brechbaren Abschnitt (52, 52a) vorbei und auf den Abschnitt des Gewindebereichs (26) auf der Bolzenkopfseite der Bruchkehlennut (28, 28a) geschraubt werden kann,

wobei der brechbare Abschnitt (52, 52a) eine Gewindeform aufweist, die geeignet ist, gewindemäßfig ergriffen zu werden, um eine relative axiale Zugkraft zwischen dem Bolzenglied (16, 16a) und der Hülse (18, 18a) anzulegen.

6. Befestigungseinrichtung nach einem der Ansprüche 1, 4 und 5, bei welcher das Mutterglied (20) geeignet ist, auf das Bolzenglied (16) mit Drehmoment aufgeschraubt zu werden, um das Bolzenglied (16) in die Hülse (18) zu ziehen, um die radiale Expansion zu veranlassen, und weiterhin mit Drehmoment aufgeschraubt zu werden, um die endgültige gewünschte Klemmlast bzw. Klemmkraft anzulegen.

7. Befestigungseinrichtung nach einem der Ansprüche 1 bis 6, bei welcher die Bruchkehlennut (28, 28a, 28b) eine axiale Zugfestigkeit aufweist, die nicht größer als etwa zwanzig (20%) Prozent mehr als die maximale axiale Last ist, so daß der brechbare Abschnitt (52, 52a, 52b) des Schaftes (21) von dem Schaft (21) mit einer minimalen axialen Belastung getrennt werden kann.

8. Befestigungseinrichtung (10, 10a, 10b), um eine Vielzahl von Werkstücken (12, 14, 12a, 14a, 12b, 14b) aus einem Verbundtypmaterial fest miteinander zu verbinden, die geeignet ist, in fluchtenden Bohrungen (34, 36, 34a, 36a) in solchen Werkstücken (12, 14, 12a, 14a, 12b, 14b) mit einer vorgewählten Preßpaffsitz lokalisiert zu werden, wobei die Befestigungseinrichtung (10, 10a, 10b) geeignet ist, solche Werkstücke (12, 14, 12a, 14a, 12b, 14b), die in der Gesamtdicke von einem vorgewählten Maximum bis zu einer vorgewählten minimalen Gesamtdicke variieren, fest miteinander zu verbinden, wobei die Befestigungseinrichtung (10, 10a, 10b) umfaßt :

ein Bolzenglied (16, 16a, 16b) mit einem langgestreckten Schaft (21) und einem langgestreckten Kopf (22, 22a) an einem Ende ;

wobei das Bolzenglied (16, 16a, 16b) einen Glattschaftbereich (24, 24a) mit verbreitertem Durchmesser angrenzend an den Bolzenkopf (22, 22a) aufweist ;

wobei das Bolzenglied (16, 16a, 16b) einen mit Gewinde versehenen Bereich bzw. Gewindebereich (26) aufweist, der sich im allgemeinen von dem Glattschaftbereich (24, 24a) zu dem entgegengesetzten Ende des Bolzengliedes (16, 16a, 16b) erstreckt ;

wobei der Gewindebolzenbereich (26) einen maximalen Durchmesser geringer als der Durchmesser des Glattschaftbereiches (24, 24a) aufweist ;

eine dünn bemessene Expansionshülse (18, 18a, 18b) mit einem rohrförmigen Abschnitt (30, 30a) ;

wobei die Hülse (18, 18a, 18b) einen Innendurchmesser größer als der maximale Durchmesser des Gewindebolzenbereiches (26) und geringer als der Durchmesser des Glattschaftbereiches (24, 24a) aufweist ;

wobei der rohrförmige Abschnitt (30, 30a) der Hülse (18, 18a, 18b) eine Länge nicht geringer als etwa die maximale Gesamtdicke der Werkstücke (12, 14, 12a, 14a, 12b, 14b) hat und einen Außendurchmesser aufweist, der den Zusammenbau dieser Hülse (18, 18a, 18b) mit dem angebrachten Bolzenglied (16, 16a, 16b) in die Werkstückbohrungen (34, 36, 34a, 36a) zuläßt ;

ein Mutterglied (20, 20a) mit einem mit Gewinde versehenen Mutterbereich bzw. Gewindemutterbereich (46, 62) an einem Ende und einem verbreiterten Kopfabschnitt (40, 42, 64) an seinem entgegengesetzten Ende ;

wobei der Gewindemutterbereich (46, 62) eine vorgewählte axiale Länge (1, 1a) aufweist ; **dadurch gekennzeichnet**, daß

eine Bruchkehlennut (28, 28a, 28b) in dem mit Gewinde versehenen Bereich bzw. Gewindebereich (26) gelegen ist, um einen brechbaren Abschnitt (52, 52a, 52b) an dem freien Ende des Gewindebereichs (26) zu definieren bzw. zu bilden ;

die Bruchkehlennut (28, 28a, 28b) der schwächste Abschnitt des Bolzengliedes (10, 10a, 10b) ist und geeignet ist, bei einer vorgewählten Belastung einer im allgemeinen geringen Größe zu brechen ;

die dünn bemessene Expansionshülse (18, 18a, 18b) einen verbreiterten Ringflansch (32, 32a) an einem Ende aufweist ;

der verbreiterte Kopfabschnitt (46, 42, 64) eine verbreiterte Gegenbohrung bzw. Senkbohrung (38, 60) umfaßt, die einen Durchmesser größer als der Außendurchmesser des rohrförmigen Abschnittes (30, 30a) der Hülse (18, 18a, 18b) aufweist, wobei die Senkbohrung (38, 60) eine axiale Tiefe zumindest gleich der maximalen Erstreckung des Hülsenrohrabschnittes (30, 30a) jenseits der Werkstücke (12, 14, 12a, 14a, 12b, 14b) für Werkstücke (12, 14, 12a, 14a, 12b, 14b) mit minimaler Gesamtdicke hat ;

der brechbare Abschnitt (52, 52a, 52b) des Gewindebereichs (26) eine axiale Länge von nicht weniger als etwa einer Hälfte der axialen Länge des Gewindemutterbereichs (46, 62) aufweist, wobei das Mutterglied (20, 20a) eine vorgewählte gesamte axiale Höhe (h, 1a+d) aufweist,

das Bolzenglied (16, 16a, 16b) in der Länge zum Abschnitt (55a) des Bolzenschaftes (21) vom Bolzenkopf (22, 22a) zur Bruchkehlennut (28, 28a, 28b) aufweist, die nicht größer als etwa die Summe aus der maximalen Gesamtdicke der Werkstücke (12, 14, 12a, 14a, 12b, 14b) der vorgewählten Höhe (h, 1a+d) des Muttergliedes (20, 20a) und der Dicke des Hülsenflansches ist ;

der Gewindemutterbereich (46, 62) des Muttergliedes (20, 20a) Gewinde aufweist, die geformt sind für einen Gewindeeingriff auf dem Abschnitt des Gewindebereichs (26) auf der Bolzenkopfseite der Bruchkehlennut (28, 28a, 28) ;

der brechbare Abschnitt (52, 52a, 52b) eine Gewindeform aufweist, die geeignet ist, gewindemäßig ergriffen zu werden, zum Anlegen einer relativen axialen Zugkraft zwischen dem Bolzenglied (16, 16a, 16b) und der Hülse (18, 18a, 18b) ;

die Bruchkehlennut (28, 28a, 28b) eine axiale Zugfestigkeit zumindest gleich der maximalen axialen Last aufweist, die erforderlich ist, das Bolzenglied (16, 16a, 16b) vollständig in die Hülse (18, 18a, 18b) zu ziehen, wobei der Glattschaftbereich (24, 24a) des Bolzens die Hülse (18, 18a, 18b) in die Werkstückbohrungen (34, 36, 34a, 36a) ausdehnt, um den vorgewählten Preßsitz bzw. Preßpaßsitz zu schaffen, wobei die Bruchkehlennut (28, 28a, 28b) eine axiale Zugfestigkeit von nicht größer als etwa zwanzig (20%) Prozent mehr als die maximale axiale Last hat, so daß der brechbare Abschnitt (52, 52a, 52b) des Schaftes (21) von dem Schaft (21) mit einer minimalen axialen Belastung getrennt werden kann.

9. Befestigungseinrichtung (10) nach Anspruch 8, bei welcher das Mutterglied (20) geeignet ist, auf das Bolzenglied (16) mit Drehmoment gedreht zu werden, um das Bolzenglied (16) in die Hülse (18) zu ziehen, um die radiale Ausdehnung zu veranlassen, und weiterhin mit Drehmoment gedreht zu werden, um die endgültige gewünschte Klemmlast bzw. Klemmkraft anzulegen.

10. Befestigungseinrichtung (10, 10a, 10b) nach Anspruch 8, die geeignet ist, durch ein Werkzeug-Mutterglied (56, 56a, 56b) gezogen zu werden, mit einem mit Gewinde versehenen Mutterabschnitt bzw. Gewindemutterabschnitt (62, 62a, 62b) an einem Ende und einem verbreiterten Kopfbereich (64, 64a) an ihrem entgegengesetzten Ende, wobei der verbreiterte Kopfbereich (64, 64a) einen verbreiterten Senkbohrungsabschnitt (60, 60a) aufweist, der einen Durchmesser größer als der Außendurchmesser des rohrförmigen Abschnittes (30, 30a) der Hülse (18, 18a, 18b) hat, wobei der Senkbohrungsabschnitt (60, 60a) eine axiale Tiefe zumindest gleich der maximalen Ausdehnung des Hülsen-Rohrabschnittes (30, 30a) jenseits der Werkstücke (12, 14, 12a, 14a, 12b, 14b) für Werkstücke (12, 14, 12a, 14a, 12b, 14b) mit minimaler Gesamtdicke aufweist, der Gewindemutterabschnitt (62, 62a, 62b) eine vorgewählte axiale Länge (1a), der verbreiterte Kopfbereich (64, 64a) eine vorbestimmte Länge (d) zumindest gleich der Distanz der Bruchkehlennut (28, 28a, 28b) von der äußeren Werkstückoberfläche (37, 37a) für eine minimale Gesamtdicke der Werkstücke (12, 14, 12a, 14a, 12b, 14b) aufweist, um einen Gewindeeingriff des Gewindemutterabschnittes (62, 62a, 62b) mit dem Abschnitt des Gewindebereichs (26) auf der Bolzenkopfseite der Bruchkehlennut (28, 28a, 28b) auszuschließen, wobei der brechbare Abschnitt (52, 52a, 52b) des Gewindebereichs (26) eine axiale Länge größer als die vorbestimmte Länge (d) hat.

11. Befestigungseinrichtung nach einem der Ansprüche 8, 9 und 10, bei der die Bruchkehlennut (28, 28a, 28b) eine axiale Zugfestigkeit nicht größer als etwa zwanzig (20%) Prozent mehr als die maximale axiale Belastung hat, so daß der brechbare Abschnitt (52, 52a, 52b) des Schaftes (21) von dem Schaft (21) mit einer minimalen axialen Belastung getrennt werden kann.

12. Befestigungseinrichtung, um eine Vielzahl von Werkstücken aus einem Verbundtypmaterial fest miteinander zu verbinden, die geeignet ist, in fluchtenden Bohrungen in solchen Werkstücken mit einer vorgewählten Preßpaßsitz lokalisiert zu werden, wobei die Befestigungseinrichtung geeignet ist, solche Werkstücke, die in der Gesamtdicke von einem vorgewählten Maximum bis zu einer vorgewählten minimalen Gesamtdicke variieren, fest miteinander zu verbinden, wobei die Befestigungseinrichtung ein Bolzenglied umfaßt, eine dünn bemessene Expansionshülse, die den Bolzen umgibt und geeignet ist, während des Zusammenbaus in Preßpaßsitz mit solchen Werkstücken durch den Bolzen ausgedehnt zu werden, und ein Mutterglied ;

wobei das Bolzenglied einen langgestreckten Schaft und einen verbreiterten Kopf an einem Ende, einen Glattschaftbereich mit verbreitertem Durchmesser angrenzend an den Bolzenkopf, einen mit Gewinde versehenen Bereich bzw. Gewindebereich aufweist, der sich im allgemeinen von dem Glattschaftbereich zum entgegengesetzten Ende des Bolzengliedes erstreckt ; wobei der Gewindebolzenbereich einen maximalen Durchmesser geringer als der Durchmesser des Glattschaftbereiches hat ;

wobei die dünn bemessene Expansionshülse einen rohrförmigen Abschnitt aufweist, die Hülse einen Innendurchmesser größer als der maximale Durchmesser des Gewindebolzenbereiches und geringer als der Durchmesser des Glattschaftbereiches hat ;

wobei der rohrförmige Abschnitt der Hülse eine Länge von nicht weniger als etwa der maximalen Gesamtlänge der Werkstücke und einen Außendurchmesser aufweist, der einen Zusammenbau der Hülse mit dem angebrachten Bolzenglied in der Werkstückbohrung zuläßt ;

wobei das Mutterglied einen Gewindemutterbereich an einem Ende und einen verbreiterten Kopfabschnitt an ihrem entgegengesetzten Ende und eine vorgewählte gesamte axiale Höhe aufweist ; dadurch **gekennzeichnet,** daß das Bolzenglied eine Bruchkehlennut aufweist, die in dem Gewindebereich gelegen ist, um einen brechbaren Abschnitt an dem freien Ende des Gewindebereichs zu definieren, wobei die Bruchkehlennut der schwächste Bereich des Bolzengliedes ist und geeignet ist, bei einer vorgewählten Belastung von im allgemeinen geringer Größe zu brechen ;

die dünn bemessene Expansionshülse einen Ringflansch an einem Ende aufweist ;

der verbreiterte Kopfabschnitt eine verbreiterte Senkbohrung mit einem Durchmesser größer als der Außendurchmesser des rohrförmigen Abschnittes der Hülse aufweist, wobei die Senkbohrung eine axiale Tiefe zumindest gleich der maximalen Ausdehnung des Hülsenrohrabschnittes jenseits der Werkstücke für Werkstücke mit minimaler Gesamtdicke und der Gewindemutterbereich eine vorgewählte axiale Länge hat ;

der brechbare Abschnitt des Gewindebereichs eine axiale Länge von nicht weniger als etwa einer Hälfte der axialen Länge des Gewindemutterbereichs aufweist ; das Bolzenglied in der Länge zum Abschnitt des Bolzenschaftes vom Bolzenkopf zur Bruchkehlennut nicht größer als etwa die Summe der maximalen Gesamtdicke der Werkstücke, der vorgewählten Höhe des Muttergliedes und der Dicke des Hülsenflansches ist ;

der Gewindebolzenbereich fortlaufend über seine gesamte Länge kontinuierlich mit Gewinde versehen ist, so daß das Mutterglied auf den Gewindebolzenbereich und über die Bruchkehlennut hinaus an dem brechbaren Abschnitt vorbei und auf den Abschnitt des Gewindebereichs auf der Bolzenkopfseite der Bruchkehlennut geschraubt werden kann ; und

die Bruchkehlennut eine axiale Zugfestigkeit zumindest gleich der maximalen axialen Last hat, die erforderlich ist, das Bolzenglied vollständig in die Hülse zu ziehen, wobei der Glattschaftbereich des Bolzens die Hülse in die Werkstückbohrungen ausdehnt, um den vorgewählten Preßpaßsitz vorzusehen.

13. Befestigungseinrichtung nach Anspruch 12, bei welchem das Installationsglied, das Mutterglied ist und der brechbare Abschnitt separat abgetrennt wird, nachdem das Mutterglied mit Drehmoment aufgeschraubt worden ist, um das Bolzenglied zu ziehen und die radiale Ausdehnung der Hülse zu veranlassen.

14. Befestigungseinrichtung nach Anspruch 12, bei welcher das Installationsglied nur an den brechbaren Abschnitt angelegt und nach der radialen Ausdehnung der Hülse mit einem Drehmoment bis zu einer Größe gedreht wird, um den brechbaren Abschnitt abzutrennen, und das Mutterglied auf den Abschnitt des Gewindebereichs auf der Bolzenkopfseite der Bruchkehlennut aufgebracht und mit Drehmoment gedreht wird, um die gewünschte Klemmkraft zwischen den Werkstücken zu erhalten.

15. Befestigungseinrichtung nach einem der Ansprüche 12 bis 14, bei welcher die Bruchkehlennut eine axiale Zugfestigkeit von nicht mehr als etwa zwanzig (20%) Prozent größer als die maximale axiale Last hat.

16. Befestigungseinrichtung nach Anspruch 15, wobei der verbreiterte Kopfbereich des Installationsgliedes eine Stützfläche aufweist, die die Bohrung des in Eingriff getretenen Werkstückes eng umgibt, um diesem eine Abstützung zu geben, so daß eine Schichttrennung bzw. Schichtauflösung bzw. Aufschichtung verhindert wird, wenn die Hülse durch axiale Bewegung des Bolzengliedes radial ausgedehnt wird.

## Revendications

1. Attache (10, 10a, 10b) pour fixer ensemble une pluralité de pièces (12, 14, 12a, 14a, 12b, 14b) en un matériau de type composite et adaptée pour être placée dans des alésages (34, 36, 34a, 36a) alignés ménagés dans lesdites pièces (12, 14, 12a, 14a, 12b, 14b) avec un joint à ajustement serré prédéfini l'attache (10, 10a, 10b) étant adaptée pour fixer lesdites pièces (12, 14, 12a, 14a, 12b, 14b) variant en épaisseur totale entre une épaisseur totale maximale prédéfinie et une épaisseur totale minimale prédéfinie, ladite attache (10, 10a, 10b) comprenant :

l'élément de broche (16, 16a, 16b) présentant une tige de forme allongée (21) et une tête évasée (22, 22a) à l'une de ses extrémités,

l'élément de broche (16, 16a, 16b) comportant une partie de tige lisse (24, 24a) de plus grand diamètre au voisinage immédiat de la tête de broche (22, 22a),

l'élément de broche (16, 16a, 16b) présentant une partie filetée au voisinage immédiat de la partie lisse (24, 24a) de la tige, la partie filetée (52, 52a, 52b) ayant un diamètre maximal inférieur au diamètre de la partie lisse (24, 24a) de la tige,

un manchon d'expansion mince (18, 18a, 18b) comportant une partie tubulaire (30, 30a),

le manchon (18, 18a, 18b) ayant un diamètre intérieur plus grand que le diamètre maximal de la partie filetée de broche, et plus petit que le diamètre de la partie lisse (24, 24a) de la tige,

la partie tubulaire (30, 30a) du manchon (18, 18a, 18b) ayant une longueur d'au moins approximativement l'épaisseur totale maximale des pièces (12, 14, 12a, 14a, 12b, 14b) et ayant un diamètre extérieur permettant le montage du manchon (18, 18a, 18b), l'élément de broche y étant fixé (16, 16a, 16b) dans les alésages (34, 36, 34a, 36a) des pièces :

un élément d'écrou (20, 20a, 56) présentant une partie d'écrou filetée (46, 62) à l'une des extrémités et une partie de tête évasée (40, 42, 64) à l'extrémité opposée, la partie d'écrou filetée (46, 62) ayant une longueur axiale prédéfinie (1, 1a), cet élément d'écrou (20, 20a, 56, 56a, 56b) ayant une hauteur axiale totale prédéfinie (h, 1a+d) ; et

la partie d'écrou filetée (46, 62) de l'élément d'écrou (20, 20a, 56) comportant des filets formés pour assemblage vissé sur la partie filetée, caractérisée par le fait que

l'élément de broche (16, 16a, 16b) comprend une partie de traction (52, 52a, 52b) s'étendant généralement depuis la partie filetée (26) jusqu'à l'extrémité opposée de cet élément de broche (16, 16a, 16b) ;

une rainure de rupture (28, 28a, 28b) est ménagée entre la partie filetée et la partie de traction (52, 52a, 52b), la partie de traction définissant une partie cassable (52, 52a, 52b) à l'extrémité libre de tige (21);

la rainure de rupture (28, 28a, 28b) étant la partie la plus faible de l'élément de broche (10, 10a, 10b) et étant adaptée pour se rompre sous une charge prédéfinie ;

le manchon d'expansion de faible épaisseur (18, 18a, 18b) ayant une bride annulaire évasée (32, 32a) à l'une de ses extrémités ;

le diamètre intérieur du manchon (18, 18a, 18b) étant plus grand que le diamètre maximal de la partie de traction (52, 52a, 52b) ;

la partie de tête évasée (40, 42, 64) présentant un épaulement élargi (38, 60) de diamètre plus grand que le diamètre extérieur de la partie tubulaire (30) du manchon (18, 18a, 18b), l'épaulement (38, 60) ayant une profondeur axiale au moins égale à l'étendue maximale de la partie tubulaire (30, 30a) du manchon au-delà des pièces (12, 14, 12a, 14a, 12b, 14b) pour les pièces (12, 14, 12a, 14a, 12b, 14b) présentant l'épaisseur totale minimale ;

l'élément de broche (16, 16a) ayant la longueur de la partie (52a) de la tige de broche (21) entre la tête de broche (22, 22a) et la rainure de rupture (28, 28a, 28b) n'excédant pas approximativement la somme de l'épaisseur totale des pièces (12, 14, 12a, 14a, 12b, 14b), de la hauteur prédéfinie (h, 1a+d) de l'élément d'écrou (20, 20a, 56, 56a, 56b) et de l'épaisseur de la bride de manchon (32, 32a) ;

la partie de traction (52, 52a, 52b), ayant une forme à rainure adaptée pour être saisie pour appliquer une force de traction axiale relative entre l'élément de broche (16, 16a, 16b) et le manchon (18, 18a, 18b) ; et

la rainure de rupture (28, 28a, 28b) ayant une résistance axiale au moins égale à la charge axiale maximale nécessaire pour enfoncer complètement cet élément de broche (16, 16a, 16b) dans ce manchon (18, 18a, 18b), la partie lisse (24, 24a) de tige de broche expansant le manchon (18, 18a, 18b) à l'intérieur des alésages (34, 36, 34a, 36a) des pièces pour donner un joint à ajustement serré.

2. Attache selon la revendication 1, caractérisée par le fait que la partie de traction (52b) est d'un diamètre plus petit que la partie filetée de la broche (10b).

3. Attache selon l'une quelconque des revendications 1 et 2, caractérisée par le fait que la partie de traction (52b) est formée avec des filets plus gros que ceux de la partie filetée.

4. Attache selon l'une quelconque des revendications 1, 2 et 3, caractérisée par le fait que l'élément d'écrou (20, 20a, 56) présente une surface de support et d'appui (44, 70) sur la partie de tête élargie (40, 42, 64, 64a), la surface de support et d'appui (44, 70) comportant un orifice d'un diamètre très proche du diamètre de l'alésage (34, 34a) d'une (12, 12a, 12b) des pièces (12, 14, 12a, 14a, 12b, 14b) à fixer de façon que la surface entourant l'alésage (34, 34a) de ladite pièce (12, 12a, 12b) soit soutenue sans possibilité de délaminage, à mesure que le manchon (18, 18a, 18b) est dilaté radialement par le déplacement axial de l'élément de broche (16, 16a, 16b).

5. Attache selon l'une quelconque des revendications 1 et 4 caractérisée par le fait que la partie filetée et la partie de traction (52, 52a) définissent une partie filetée (25) s'étendant généralement depuis la partie de tige lisse (24, 24a) jusqu'à l'extrémité opposée de l'élément de broche (16, 16a),

la partie de broche filetée (27) étant filetée en continu sur toute sa longueur, de sorte que l'élément d'écrou (20, 20a, 56) peut être vissé sur la partie de broche filetée (26) en traversant la rainure de rupture (28, 28a) au-delà de la partie cassable (52, 52a) pour atteindre cette partie de la partie filetée (26) sur le côté de la tête de la broche de la rainure de rupture (28, 28a),

la partie cassable (52, 52a) ayant une forme de filet adaptée pour être saisie par des filets pour appliquer une force de traction axiale relative entre l'élément de broche (16, 16a) et le manchon (18, 18a).

6. Attache selon l'une quelconque des revendications 1, 4 et 5, caractérisée par le fait que l'élément d'écrou (20) est adapté pour être serré sur l'élément de broche (16) pour enfoncer l'élément de broche (16) dans le manchon (18) et créer l'expansion radiale, et à continuer à être serré pour donner la charge de serrage finale désirée.

7. Attache selon l'une quelconque des revendications 1 à 6, caractérisée par le fait que la rainure de rupture (28, 28a, 28b) a une résistance axiale qui n'excède pas de plus de vingt pour cent environ la charge axiale maximale, la partie cassable (52, 52a, 52b) de la tige (21) pouvant être détachée de la tige (21) pour une charge axiale minimale.

8. Attache (10, 10a, 10b) pour fixer ensemble une pluralité de pièces (12, 14, 12a, 14a, 12b,14b) en un matériau de type composite et adaptée pour être mise en place dans des alésages (34, 36, 34a, 36a) de ces pièces (12, 14, 12a, 14a, 12b, 14b) selon un joint en ajustement serré prédéfini, l'attache (10, 10a, 10b) étant adaptée pour fixer les pièces (12, 14, 12a, 14a, 12b, 14b) variant en épaisseur total d'une épaisseur totale maximale prédéfinie à une épaisseur minimale prédéfinie, l'attache (10, 10a, 10b) comprenant :

un élément de broche (16, 16a, 16b) présentant une tige (21) de forme allongée et une tête (22, 22a) de forme allongée à l'une de ses extrémités,

l'élément de broche (16, 16a, 16b) présentant une partie de tige lisse (24, 24a) de plus grand diamètre au voisinage immédiat de la tête de broche (22, 22a),

l'élément de broche (16, 16a, 16b) ayant une partie filetée (26) s'étendant généralement depuis la partie de tige lisse (24, 24a) jusqu'à l'extrémité opposée de l'élément de broche (16, 16a, 16b),

la partie de broche filetée (26) présentant un diamètre maximal plus petit que le diamètre de la partie de tige lisse (24, 24a),

un manchon d'expansion (18, 18a, 18b) de faible épaisseur avec partie tubulaire (30, 30a),

le manchon (18, 18a, 18b) présentant un diamètre intérieur plus grand que le diamètre maximal de la partie de broche filetée (26) et inférieur au diamètre de la partie de tige lisse (24, 24a),

la partie tubulaire (30, 30a) du manchon (18, 18a, 18b) ayant une longueur d'au moins approximativement l'épaisseur totale maximale des pièces (12, 14, 12a, 14a, 12b, 14b) et ayant un diamètre extérieur permettant le montage du manchon (18, 18a, 18b) sur lequel est fixé l'élément de broche (16, 16a, 16b) dans les alésages des pièces (34, 36, 34a, 36a),

un élément d'écrou (20, 20a) présentant une partie d'écrou fileté (46, 62) à l'une des extrémités et une partie de tête évasée (40, 42, 64) à son extrémité opposée, la partie d'écrou fileté (46, 62) ayant une longueur axiale prédéfinie (1, 1a), caractérisé par le fait que,

une rainure de rupture (28, 28a, 28b) est prévue dans la partie filetée (26) pour définir une partie cassable (52, 52a, 52b) à l'extrémité libre de la partie filetée (26),

la rainure de rupture (28, 28a, 28b) étant la partie la plus faible de l'élément de broche (10, 10a, 10b) et étant adaptée à se rompre pour une charge prédéfinie qui est généralement de faible grandeur,

le manchon d'expansion (18, 18a, 18b) de faible épaisseur présentant une bride annulaire évasée (32, 32a) à l'une de ses extrémités,

la partie de tête évasée (46, 42, 64) présentant un épaulement élargi (38, 60) dont le diamètre est plus grand que le diamètre extérieur de la partie tubulaire (30, 30a) du manchon (18, 18a, 18b), l'épaulement (38, 60) ayant une profondeur axiale au moins égale à la longueur maximale de la partie tubulaire de manchon (30, 30a) dépassant les pièces (12, 14, 12a, 14a, 12b, 14b) pour les pièces (12, 14, 12a, 14a, 12b, 14b) ayant l'épaisseur totale minimale,

la partie cassable (52, 52a, 52b) de la partie filetée (26) présentant une longueur axiale d'au moins environ une moitié de la longueur axiale de la partie d'écrou fileté (46, 62), l'élément d'écrou (20, 20a) ayant une hauteur axiale totale prédéfinie (h, 1a+d),

l'élément de broche (16, 16a, 16b) ayant la longueur de cette partie (55a) de la tige de broche (21) comprise entre la tête de broche (22, 22a) et la rainure de rupture (28, 28a, 28b) n'excédant pas approximativement la somme de l'épaisseur totale maximale des pièces (12, 14, 12a, 14a, 12b, 14b), de cette hauteur prédéfinie (h, 1a+d), de l'élément d'écrou (20, 20a) et de l'épaisseur de la brise de manchon,

la partie d'écrou filetée (46, 62) de l'élément d'écrou (20, 20a) présentant des filets pour un vissage sur la partie filetée (26) sur le côté de la tête de broche de la rainure de rupture (28, 28a, 28b),

la partie cassable (52, 52a, 52b) ayant une forme de filet adaptée pour être saisie par vissage pour appliquer une force de traction axiale relative entre l'élément de broche (16, 16a, 16b) et le manchon (18, 18a, 18b),

la rainure de rupture (28, 28a, 28b) ayant une résistance axiale au moins égale à la charge axiale maximale nécessaire pour enfoncer complètement l'élément de broche (16, 16a, 16b) dans le manchon (18, 18a, 18b), cette partie de tige lisse de la broche (24, 24a) dilatant ce manchon (18, 18a, 18b) dans les alésages des pièces (34, 36, 34a, 26a) pour donner un joint à ajustage serré prédéfini, la rainure de rupture (28, 28a, 28b) ayant une résistance axiale n'excédant pas approximativement vingt pour cent en sus de cette charge axiale maximale, la partie cassable (52, 52a, 52b) de la tige (21) pouvant être détachée de la tige (21) sous une charge axiale minimale.

9. Attache (10) selon la revendication 8, caractérisée par le fait que l'élément d'écrou (20) est adapté pour être serré sur l'élément de broche (16) pour enfoncer l'élément de broche (16) dans ce manchon (18) pour provoquer l'expansion radiale et pour continuer à être serré afin d'appliquer la charge de serrage finale souhaitée.

10. Attache (10, 10a, 10b) selon la revendication 8, caractérisée par le fait qu'elle est adaptée pour être tirée par un élément d'outil à écrou (56, 56a, 56b) présentant une partie d'écrou fileté (62, 62a, 62b) à une extrémité et une partie de tête évasée (64, 64a) à l'extrémité opposée, la partie de tête évasée (64, 64a) ayant une partie d'épaulement élargi (60, 60a) dont le diamètre est plus grand que le diamètre extérieur de la partie tubulaire (30, 30a) du manchon (18, 18a, 18b), la partie d'épaulement (60, 60a) présentant une profondeur axiale au moins égale à l'étendue maximale de la partie tubulaire de manchon (30, 30a) qui dépasse les pièces (12, 14, 12a, 14a, 12b, 14b) dans le cas de pièces (12, 14, 12a, 14a, 12b, 14b) de l'épaisseur totale minimale, la partie d'écrou fileté présentant une longueur axiale prédéfinie (1a), la partie de tête évasée (64, 64a) présentant une longueur prédéfinie (d) qui est au moins égale à la distance de la rainure de rupture (28, 28a, 28b) de la surface extérieure de la pièce (37, 37a) pour une épaisseur totale minimale des pièces (12, 14, 12a, 14a, 12b, 14b) afin d'empêcher le vissage de la partie d'écrou filetée (62, 62a, 62b) avec la partie filetée (26) du côté de la tête de la broche de la rainure de rupture (28, 28a, 28b), la partie cassable (52, 52a, 52b) de la partie filetée (26) présentant une longueur axiale plus grande que la longueur prédéfinie (d).

11. Attache selon l'une quelconque des revendications 8, 9 et 10, caractérisée par le fait que rupture (28, 28a, 28b) présente une résistance axiale qui n'excède pas de plus d'approximativement vingt pour cent la charge axiale maximale, la partie cassable (52, 52a, 52b) de la tige (21) pouvant ainsi être détachée de la tige (21) pour une charge axiale minimale.

12. Attache pour assujettir ensemble une pluralité de pièces d'un matériau de type composite et adaptée pour être placée dans des alésages en alignement de ces pièces avec joint en ajustage serré prédéfini, l'attache étant adaptée pour assujettir des pièces dont l'épaisseur totale varie entre une épaisseur maximale prédéfinie et une épaisseur minimale prédéfinie, l'attache comprenant un élément de broche, un manchon d'expansion de faible épaisseur entourant la broche et adapté à être expanser par la broche au moment du montage pour donner avec ces pièces un joint à ajustage serré, et un élément d'écrou,

l'élément de broche comprenant une tige de forme allongée et une tête évasée à une extrémité, une partie de tige lisse de plus grand diamètre au voisinage immédiat de la tête de broche, une partie filetée s'étendant généralement depuis la partie de tige lisse jusqu'à l'extrémité opposée de l'élément de broche,

la partie de broche filetée ayant un diamètre maximal plus petit que le diamètre de la partie de tige lisse,

un manchon d'expansion de faible épaisseur comportant une partie tubulaire, le manchon présentant un diamètre intérieur plus grand que le diamètre maximal de la partie de broche filetée et plus petit que le diamètre de la partie de tige lisse,

la partie tubulaire du manchon ayant une longueur d'au moins approximativement l'épaisseur totale des pièces, et ayant un diamètre extérieur permettant le montage du manchon, auquel est fixé l'élément de broche, dans les alésages des pièces,

l'élément d'écrou ayant une partie d'écrou fileté à une extrémité et une partie de tête évasée à l'extrémité opposée et une hauteur axiale totale prédéfinie, caractérisé par le fait que

l'élément de broche comporte une rainure de rupture placée dans la partie filetée pour définir une partie cassable à l'extrémité libre de la partie filetée, rainure de rupture étant la partie la plus faible de l'élément de broche et étant adaptée pour se rompre pour une charge prédéfinie généralement peu importante,

le manchon d'expansion de faible épaisseur présentant une bride annulaire à l'une de ses extrémités,

la partie de tête évasée présentant un épaulement élargi dont le diamètre est plus grand que le diamètre extérieur de cette partie tubulaire du manchon, l'épaulement ayant une profondeur axiale au moins égale à l'étendue maximale de la partie de manchon tubulaire dépassant les pièces dans le cas de pièces ayant l'épaisseur totale minimale, la partie d'écrou fileté ayant une longueur axiale prédéfinie,

la partie cassable de la partie filetée ayant une longueur axiale d'au moins environ une moitié de la longueur axiale de la partie d'écrou filetée,

l'élément de broche ayant la longueur de la tige de broche comprise entre la tête de broche et la rainure de rupture n'excédant pas approximativement la somme de l'épaisseur maximale totale des pièces, de la hauteur prédéfinie de l'élément d'écrou et de l'épaisseur de la bride de manchon,

la partie de broche filetée étant filetée en continu sur toute sa longueur, de sorte que l'élément d'écrou peut être vissé sur la partie de broche filetée en traversant la rainure de rupture pour dépasser la partie cassable et sur la partie de la partie filetée du côté de la tête de broche de la rainure de rupture, et,

la rainure de rupture ayant une résistance axiale au moins égale à la charge axiale maximale nécessaire pour enfoncer complètement cet élément de broche dans le manchon, la partie de tige lisse de broche expansant le manchon dans les alésages des pièces pour donner le joint à ajustage serré préalablement choisi.

13. Attache selon la revendication 12, caractérisée par le fait que l'élément de montage est l'élément d'écrou, et que la partie cassable est détachée séparément après que l'élément d'écrou a été serré pour tirer l'élément d'écrou pour provoquer l'expansion radiale du manchon.

14. Attache selon la revendication 12, caractérisée par le fait que l'élément de montage est appliqué uniquement à la partie cassable et qu'il est serré après l'expansion radiale du manchon selon une valeur propre à détacher la partie cassable, et par l'application de élément d'écrou sur la partie de la partie filetée du côté de la tête de broche de la rainure de rupture et par son serrage afin d'atteindre la charge de serrage désirée entre les pièces.

15. Attache selon l'une quelconque des revendications 12 à 14, caractérisée par le fait que la rainure de rupture présente une résistance axiale n'excédant pas de plus d'approximativement vingt pour cent la charge axiale maximale.

16. Attache selon la revendication 15, caractérisée par le fait que la partie de tête évasée de l'élément d'écrou présente une surface d'appui entourant étroitement l'alésage de la pièce attaquée pour fournir un support, le délaminage étant ainsi empêché à mesure que le manchon est expansé radialement par le déplacement axial de l'élément de broche.

Fig-1a

Fig-1b

Fig-3

Fig-1c

*Fig-2a*

*Fig-2b*

*Fig-2d*

*Fig-2c*

*Fig-4*